# EUROPÄISCHE PATENTSCHRIFT

(11) **EP 1 693 941 B1**
(45) Veröffentlichungstag und Bekanntmachung des Hinweises auf die Patenterteilung: **10.06.2009**
(21) Anmeldenummer: 06110167.1
(22) Anmeldetag: 20.02.2006
(51) Int. Cl.: H02G 11/02

(54) **Kabelaufwickler für Kopfhörer, insbesondere Sprechgarnituren für Mobiltelefone**
Cable reel-up for headset, particularly speaking set for mobile telephones
Enrouleur de câble pour casque d'écoute, particulièrement pour microphone de téléphones mobiles

(30) Priorität: 21.02.2005 DE 202005002847 U
(43) Veröffentlichungstag der Anmeldung: 23.08.2006
(73) Patentinhaber: Wegner, Harald, 60325 Frankfurt (DE)
(72) Erfinder: Wegner, Harald, 60325 Frankfurt (DE)
(74) Vertreter: 2K Patentanwälte Blasberg Kewitz & Reichel

(56) Entgegenhaltungen:
- EP-A- 0 928 053
- DE-A1- 10 053 949
- DE-B- 1 168 206

## Beschreibung

### GEBIET DER ERFINDUNG

Die vorliegende Erfindung betrifft einen Kabelaufwickler für Ohrhörer, insbesondere für eine Freisprechgarnitur für Mobiltelefone.

### HINTERGRUND DER ERFINDUNG

Eine Freisprechgarnitur für Mobiltelefone besteht üblicherweise aus einem oder zwei Ohrhörern, einem Kabel mit einem daran vorgesehenen Stecker zum Verbinden mit dem Mobiltelefon sowie mit einem Mikrophon, üblicherweise mit Klammer, das an dem Kabel vorgesehen ist. Vergleichbare Ohrhörer sind für eine Reihe anderer elektronischer Geräte verfügbar, beispielsweise für mobile Stereocassettenrecorder, mobile CD-Player, mobile MP3-Player und dergleichen, und können ein oder zwei Knöpfe zum Einstecken in die Ohrmuschel umfassen. Solche Ohrhörer ermöglichen den mobilen Einsatz von elektronischen Geräten, beispielsweise beim Gehen, Laufen, Autofahren oder Arbeiten. Für all diese Anwendungen muss eine ausreichende Kabellänge zur Verfügung stehen, was häufig zu einem unerwünschten Kabelgewirr führt.

Zur Vermeidung eines solchen Kabelgewirrs offenbart DE 296 21 717 U1 einen Kabelaufwickler für das Kabel einer Freisprechgarnitur mit einem Gehäuse und einer in dem Gehäuse vorgesehenen Kabelaufwickeleinheit, die einen drehbeweglichen zylindrischen Kabelaufwickelkörper zum Aufwickeln des Kabels umfasst. Der Kabelaufwickelkörper ist mittels einer Dreh- bzw. Spiralfeder in eine Drehrichtung vorgespannt, in der das Kabel weiter auf den Kabelaufwickelkörper aufgewickelt wird. Das Kabel ist fest mit dem Kabelaufwickler verbunden, so dass für unterschiedliche Arten von Freisprechgarnituren unterschiedliche Kabelaufwickler hergestellt, bevorratet und vertrieben werden müssen. Dies erhöht die Herstellungs- und Vertriebskosten unnötig. Derselbe Kabelaufwickler kann auch nicht für unterschiedliche elektronische Geräte, beispielsweise Mobiltelefon und mobiles Datenabspielgerät, verwendet werden.

Weitere Kabelaufwickler, die für fest vorgegebene Anwendungen ausgelegt sind, werden in DE 20 2004 011 010 U1, DE 20 2004 014 202 U1, DE 2004 005 833 U1, DE 298 13 079 U1, DE 202 05 121 U1, DE 201 20 215 U1, DE 201 19 860 U1 und DE 198 47 143 A1 offenbart. Weitere Kabelaufwickler überwiegend für stationäre Anwendungen, werden in den US-Patenten US 5,489,010, US 5,544,836, US 5,723,815, US 6,578,683 B1, US 6,623,294 B2 und US 6,626,389 B2 offenbart. Diese Kabelaufwickler eignen sich nicht für die gemeinsame Verwendung für unterschiedliche Ohrhörer-Typen.

Ein Kabelaufroller mit Mehrfachfunktion ist in DE 20 2004 001 604 U1 offenbart. Zur Auslegung des Kabelaufrollers für unterschiedliche technische Funktionen kann das untere Gehäuseteil mit Funktionselementen zur Realisierung der unterschiedlichen technischen Funktionen kombiniert werden, insbesondere mit USB-Steckbuchsen, Kartenlesern, Steckdosen, Kühlventilatoren, Funksendern und dergleichen. Dieser Kabelaufroller eignet sich nicht zur Verwendung für vom Nutzer bereits gekaufte Ohrhörer bzw. Freisprechgarnituren für Mobiltelefone.

US 6,803,525 B1 offenbart einen Kabelaufwickler. In dem zylindrischen Gehäuse ist eine Kabelaufwickeleinheit mit einem zylindrischen Kabelaufwickelkörper mit einem oberen und einem unteren Wickelflansch vorgesehen. Zum Vorspannen des Kabelaufwickelkörpers ist eine Drehfeder vorgesehen, deren eines Ende mit dem Kabelaufwickelkörper wirkverbunden ist und deren anderes Ende mit dem Gehäuse wirkverbunden ist. Zum Montieren des Kabelaufwicklers muss zunächst das Kabel geeignet aufgewickelt werden und dann die Drehfeder zum Vorspannen des Kabelaufwickelkörpers geeignet eingehängt werden. Ein nachträglicher Austausch des Kabels ist nicht vorgesehen und bei nicht ausgehängter Drehfeder auch nicht möglich. Der Kabelaufwickler eignet sich deshalb nicht zum einfachen Austauschen des Kabels, d.h. für die Verwendung für einen anderen Ohrhörer.

DE 100 53 949 A1 offenbart einen Kabelaufwickler gemäß dem Oberbegriff von Anspruch 1, bei dem das Kabel jedoch später nicht mehr ausgetauscht werden kann. Der Sperrmechanismus kann den Kabelaufwickelkörper im vollständig abgespulten Zustand des Kabels nicht sperren.

DE 1 168 206 offenbart eine Kabelspule, wie sie früher für Diktiergeräte üblich war, um das Kabel, das das Diktiergerät mit dem Mikrofon verbindet, zurückzuspulen, wenn die Abzugskraft nicht mehr stark genug ist. Ein Auswechseln des Kabels ist jedoch nicht möglich. Offenbart ist lediglich, dass ein segmentförmiger Träger 15, der in einer Aussparung auf der Oberseite des Spulenkörpers 1 sitzt, ausgetauscht werden kann, etwa wenn die elektrischen Kontakte beschädigt sind oder ein Kabel abgerissen ist. Das stellt jedoch einen anderen Lösungsansatz als nach der beanspruchten Erfindung dar.

Die EP 0 928 053 A2 offenbart eine Schalttafel zum einfachen Konfigurieren von Netzwerken, wobei zwei Steckerkabel in einer Kassette aufgenommen sind. Die Steckerkabel sind jedoch auf unterschiedliche Spulenkörper aufgespult. Ein Auswechseln eines Kabels ist hier nicht offenbart.

### ZUSAMMENFASSUNG DER ERFINDUNG

Aufgabe der vorliegenden Erfindung ist es, einen Kabelaufwickler für Ohrhörer, insbesondere für Freisprechgarnituren von Mobiltelefonen, bereitzustellen, womit der Ohrhörer bzw. das Ohrhörerkabel in einfacher Weise ausgetauscht werden kann.

Diese und weitere Aufgaben werden gemäß der vorliegenden Erfindung durch einen Kabelaufwickler mit den Merkmalen nach Anspruch 1 gelöst. Weitere vorteilhafte Ausführungsformen sind Gegenstand der rückbezogenen Unteransprüche.

Ein Kabelaufwickler gemäß der vorliegenden Erfindung zeichnet sich dadurch aus, dass die Kabelaufwickeleinheit so ausgelegt ist, dass das Ohrhörerkabel bei vorgespanntem Kabelaufwickelkörper austauschbar ist. Somit kann ein und derselbe Kabelaufwickler für unterschiedliche Arten von Ohrhörern verwendet werden. Der Austausch läßt sich dabei vom Nutzer selbst vornehmen, ohne dass die Kabelaufwickeleinheit zerlegt und nach Austausch des Kabels wieder zusammengesetzt werden muss und/oder ohne dass eine den Kabelaufwickelkörper vorspannende Drehfeder ausgehängt und nach dem Austausch des Kabels wieder eingehängt werden muss. Der erfindungsgemäße Kabelaufwickler kann somit als Zubehörteil unabhängig von dem Ohrhörer selbst vertrieben werden und der Austausch bzw. das Einsetzen des Ohrhörerkabels kann vom Nutzer selbst vorgenommen werden.

Zweckmäßig weist der Kabelaufwickelkörper einen Kabelklemmbereich zum Klemmen des Ohrhörerkabels auf. Dieser kann von einem Klemmelement am Außenumfang des Kabelaufwickelkörpers oder bevorzugter von einem von axial abragenden Wänden des Kabelaufwickelkörpers gebildeten kanalartigen Kabelführungsbereich ausgebildet werden. Zweckmäßig ist das Gehäuse und/oder die Kabelaufwickeleinheit so ausgelegt, dass das Ohrhörerkabel in einer vollständig abgewickelten Drehstellung des Kabelaufwickelkörpers aus dem vorgenannten Klemmbereich entnommen werden und ein anderes Ohrhörerkabel von diesem erneut geklemmt werden kann. Ein mühsames Ausfädeln des Ohrhörerkabels ist somit nicht erforderlich. Auch das neue Ohrhörerkabel kann im Wesentlichen in gestreckter Form in den Kabelklemmbereich eingelegt und von diesem geklemmt werden.

Damit der Kabelklemmbereich zum Austauschen des Ohrhörerkabels in geeigneter Weise zugänglich ist, kann an dem Gehäuse eine abnehmbare Blende vorgesehen sein und/oder können verstellbare, insbesondere ausklappbare bzw. verschwenkbare Gehäuseabschnitte vorgesehen sein, die den Kabeleinlaufbereich und den Kabelauslaufbereich des Kabelaufwicklers zum Austausch des Ohrhörerkabels freigeben und nach dem Austausch erneut abdecken, so dass das Kabel nicht unbeabsichtigt entnommen bzw. herausfallen kann.

Gemäß einer weiteren Ausführungsform ist die Kabelaufwickeleinheit gemeinsam mit dem vorgespannten Kabelaufwickelkörper in dem Gehäuse radial verschieblich aufgenommen und ist ein Austausch des Ohrhörerkabels dann verhindert, wenn die Kabelaufwickeleinheit vollständig in dem Gehäuse aufgenommen ist. Diese Funktion kann durch geeignete Formgestaltung von Elementen der Kabelaufwickeleinheit und des Gehäuses bewerkstelligt werden, beispielsweise dadurch, dass der Kabeleinlaufbereich und/oder Kabelauslaufbereich, der das jeweils einlaufende Kabel umfänglich umgreift, durch Zusammenwirken von Abschnitten der Kabelaufwickeleinheit und von Abschnitten des Gehäuses ausgebildet ist bzw. sind.

Gemäß einer weiteren, bevorzugten Ausführungsform kann die Kabelaufwickeleinheit gemeinsam mit dem vorgespannten Kabelaufwickelkörper vollständig aus dem Gehäuse heraus genommen werden. Dies ermöglicht einen Austausch des Kabels bei herausgenommener Kabelaufwickeleinheit. Vorteilhaft ist, dass der Austausch des Kabels nicht durch Gehäuseabschnitte verhindert bzw. erschwert ist.

Dabei kann es zweckmäßig sein, an dem Gehäuse und/oder der Kabelaufwickeleinheit einen Rastmechanismus zum lösbaren Sichern der Kabelaufwickeleinheit in dem Gehäuse vorzusehen. Ein solcher Rastmechanismus kann durch zusammenwirkende Rastelemente oder durch einen lösbaren Arretiermechanismus ausgebildet werden. Gemäß einer weiteren Ausführungsform wird die vorgenannte Sicherungsfunktion durch ein Clips-Element ausgeübt, zweckmäßig unter elastischer Verformung von Abschnitten des Gehäuses und/oder der Kabelaufwickeleinheit.

Gemäß einer weiteren Ausführungsform ist ferner ein Sperrmechanismus zum lösbaren Sperren der Drehbewegung des Kabelaufwickelkörpers vorgesehen, und zwar in diskreten oder beliebigen Drehstellungen des Kabelaufwickelkörpers. Somit kann ein unbeabsichtigtes Aufwickeln des Kabels zuverlässig verhindert werden, beispielsweise während des Gebrauchs des erfindungsgemäßen Kabelaufwicklers oder während des Austauschens des Kabels, insbesondere um das Kabel zuverlässig in den vorgenannten Kabelklemmbereich einzulegen.

Dabei kann der Sperrmechanismus durch Zusammenwirken des Gehäuses mit der Kabelaufwickeleinheit ausgebildet sein, beispielsweise dergestalt, dass eine bewegliche Sperrklinke an dem Gehäuse vorgesehen ist und ein mit dieser zusammenwirkendes Rad mit einer Rastverzahnung an dem Kabelaufwickelkörper vorgesehen ist.

Gemäß einer weiteren Ausführungsform ist der Sperrmechanismus vollständig innerhalb der Kabelaufwickeleinheit ausgebildet. Dies erleichtert ein vollständiges Herausnehmen der Kabelaufwickeleinheit bei vorgespanntem Kabelaufwickelkörper. Der Sperrmechanismus blockiert dabei den Kabelaufwickelkörper zweckmäßig auch im herausgenommenen Zustand der Kabelaufwickeleinheit.

Gemäß einer weiteren auch unabhängig beanspruchbaren Ausführungsform umfasst die Kabelaufwickeleinheit eine Drehfeder zum Vorspannen des Kabelaufwickelkörpers, deren eines Ende mit einem Boden der Kabelaufwickeleinheit wirkverbunden ist und deren anderes Ende mit dem Kabelaufwickelkörper wirkverbunden ist. Somit kann die gesamte Kabelaufwickeleinheit aus dem Gehäuse heraus genommen werden, ohne dass die Drehfeder ausgehängt werden muss. Dies erleichtert einen einfachen Austausch des Kabels im herausgenommenen Zustand.

### KURZE BESCHREIBUNG DER ZEICHNUNGEN

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:
- Fig. 1: in einer perspektivischen Explosionsdarstellung einen Kabelaufwickler gemäß einer ersten Ausführungsform der vorliegenden Erfindung darstellt;
- Fig. 2a-2b: den Kabelaufwickelzylinder gemäß der Fig. 1 in einer Draufsicht, einer perspektivischen Draufsicht, einer Unteransicht und einer Seitenansicht zeigen;
- Fig. 3a-3c: den Sockel der Kabelaufwickeleinheit gemäß der Fig. 1 in einer Draufsicht, einer Unteransicht und einer perspektivischen Draufsicht zeigen;
- Fig. 4: in einer perspektivischen Explosionsdarstellung einen Kabelaufwickler gemäß einer zweiten Ausführungsform der vorliegenden Erfindung darstellt;
- Fig. 5a-5b: die beiden Gehäuseschalen gemäß der Fig. 4 in einer perspektivischen Darstellung zeigen;
- Fig. 6: in einer perspektivischen Darstellung die Kabelaufwickelmechanik mit einem Trägerrahmen und Kabeltrommel zeigen;
- Fig. 7: den Kabelaufwickler gemäß der Fig. 4 mit vollständig aufgeklappten Gehäuseschalen zeigt;
- Fig. 8: in einer perspektivischen Draufsicht den Kabelaufwickler gemäß der Fig. 4 ohne die kleine Gehäuseschale darstellt; und
- Fig. 9: in einer perspektivischen Draufsicht den Kabelaufwickler gemäß der Fig. 4 bei zusammengeklappten Gehäuseschalen und mit eingelegtem Ohrhörerkabel darstellt.

In den Figuren bezeichnen identische Bezugszeichen identische oder im Wesentlichen gleich wirkende Elemente oder Elementgruppen.

### AUSFÜHRLICHE BESCHREIBUNG VON BEVORZUGTEN AUSFÜHRUNGSBEISPIELEN

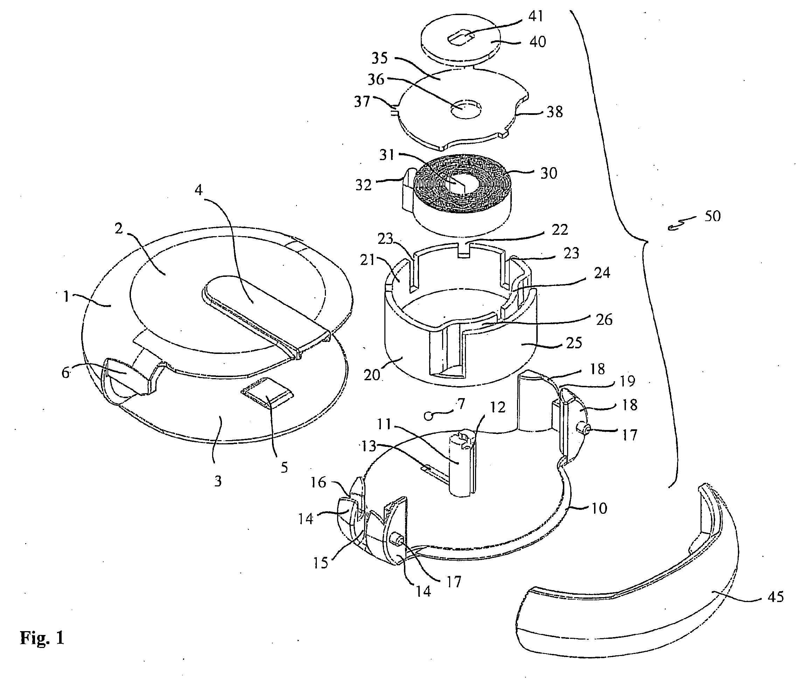

Gemäß der Fig. 1 umfasst der Kabelaufwickler ein Gehäuse 1, in dem die insgesamt mit 50 bezeichnete Kabelaufwickeleinheit herausnehmbar aufgenommen ist. Der obere Umfangsrand des Gehäuses 1 kann durch eine auf die Zapfen 17 aufsteckbare Blende 45 abgedeckt werden, so dass die umfängliche Seitenwand des Gehäuses 1 beinahe vollständig geschlossen ausgebildet ist und das Kabel (nicht gezeigt) an einander diametral gegenüberliegenden Kabeleinlauf- und Kabelauslaufbereichen in die Kabelaufwickeleinheit 50 hinein geführt und wieder heraus geführt ist.

Gemäß der Fig. 1 umfasst die Kabelaufwickeleinheit 50 einen insgesamt mit 10 bezeichneten Sockel mit einem darauf vorgesehenen axialen Zapfen 11, auf dem der Kabelaufwickelzylinder 20 drehbeweglich gelagert ist. Die Umfangs-Seitenwand 21 und die bogenförmig gekrümmte Seitenwand 24 des Zylinders 20 bilden eine zylindrische Aufnahme, in der die Drehfeder 30 aufgenommen ist. Das eine Ende 31 der Drehfeder 30 ist in den Schlitz 12 des den Boden des Zylinders 20 durchragenden Zapfens 11 eingehängt, das andere, zu einer Lasche 32 gebogene Ende der Drehfeder 30 ist in die axialen Aussparungen 23 des Zylinders 20 eingehängt. Die zylindrische Aufnahme ist nach oben hin von einem Federdeckel 38 abgedeckt, deren radiale Vorsprünge 37 in weitere axiale Aussparungen 22 des Zylinders 20 eingesteckt sind. Zum vollständigen Abschließen der zylindrischen Aufnahme und zur Realisierung eines Formschlusses ist der vordere Rand 38 des Federdeckels 35 an die Kontur des bogenförmig gekrümmten Bereichs 24 des Zylinders 20 angepasst. Auf dem Federdeckel 35 sitzt eine Sicherungsscheibe 40 mit einer Innenbohrung 41, die korrespondierend zu dem vorderen freien Ende des Zapfens 11 ausgebildet ist. Durch Aufstecken der Sicherungsscheibe 40 auf das vordere freie Ende des Zapfens 11 wird der Zylinder 20 mit der darin aufgenommenen Drehfeder 30 axial gesichert, bevorzugt im Wesentlichen spielfrei. Die vorgenannte axiale Sicherung kann mittels einer Heißverprägung des Federdeckels 40 an dem Zapfen 11 bewerkstelligt werden. Aufgrund des vorgenannten Aufbaus kann die Kabelaufwickeleinheit 50 als Einheit in das Gehäuse 1 eingeschoben und aus diesem wieder heraus genommen werden, und zwar bei vorgespanntem Zylinder 20, wie nachfolgend beschrieben.

Gemäß der Fig. 1 bildet die bogenförmig gekrümmte Seitenwand 24 und die Umfangs-Seitenwand 25 des Zylinders 20 einen Kabelklemmbereich bzw. eine Kabelführung 26 für das Kabel aus. Zum Einlegen bzw. Austausch des Kabels wird der Zylinder 20 in eine Drehstellung gebracht, in der das vordere bzw. hintere Ende der vorgenannten Kabelführung 26 mit dem vorderen 15 bzw. hinteren 19 Kabeleinlaufbereich des Sockels 10 fluchtet bzw. ausgerichtet ist. Diese Drehstellung kann durch einen Sperrmechanismus, wie nachfolgend beschrieben, bei vorgespannter Drehfeder 30 gesichert werden. Gemäß der Fig. 1 sind der vordere und hintere Kabeleinlaufbereich 15, 19 nach oben hin offen, wenn die Kabelaufwickeleinheit 50 aus dem Gehäuse 1 herausgenommen ist. Zum Einlegen des Kabels in die Kabelaufwickeleinheit 50 kann das Kabel somit in der vorgenannten Drehstellung des Zylinders 20 von oben her eingeführt und in die Kabelführung bzw. den Kabelklemmbereich 26 eingelegt werden. In dieser Drehstellung ist der Kabelaufwickelzylinder 20 weiterhin durch die Drehfeder 30 in eine Drehrichtung vorgespannt, in der das Kabel weiter aufgewickelt wird. Nach Lösen des Sperrmechanismus wird das Kabel automatisch auf der Umfangs-Seitenwand 21 des Zylinders 20 aufgewickelt. Dabei muss darauf geachtet werden, dass das Kabel nicht nach oben hin aus dem Kabeleinlaufbereich 15, 19 entweicht. Dies kann durch Auflegen von Fingern auf die oberen Enden der vorderen bzw. hinteren Kabeleinlaufwangen 14, 18 des Sockels 10 bewerkstelligt werden, wenn die Kabelaufwickeleinheit 50 noch nicht in das Gehäuse 1 hinein geschoben ist. Gemäß der bevorzugten Ausführungsform wird jedoch die Kabelaufwickeleinheit 50 nach dem Austauschen des Kabels zunächst in das Gehäuse 1 eingeschoben und dann das Kabel durch Lösen des Sperrmechanismus automatisch aufgewickelt. Wie der Fig. 1 entnommen werden, wird der vordere und hintere Kabeleinlaufbereich 15, 19 nach oben hin durch die Seitenblende 6 und die Gehäuseoberseite 2 gesichert, wenn die Kabelaufwickeleinheit 50 vollständig in das Gehäuse 1 hinein geschoben ist. In der vollständig hinein geschobenen Stellung greift die Seitenblende 6 in den in den vorderen Kabeleinlaufwangen 14 ausgebildeten tangentialen Schlitz 16 ein, um die Kabelaufwickeleinheit 50 weiter zu sichern. Somit kann das Kabel nicht ausgewechselt werden, wenn die Kabelaufwickeleinheit 50 in dem Gehäuse 1 aufgenommen ist.

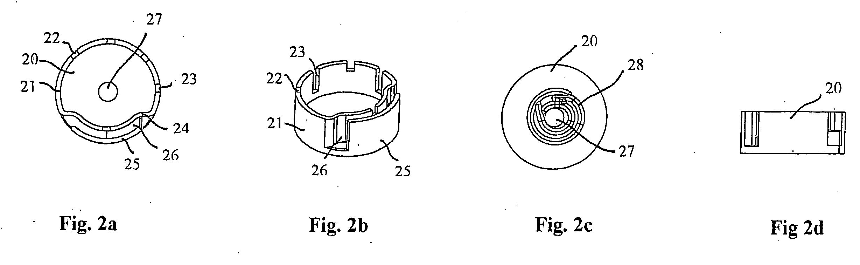

Zum Sperren der Drehbewegung des Zylinders 20 dient eine Kugel 7, die in einer in dem Boden des Sockels 10 vorgesehenen radialen Aussparung 13 und in einer auf der Unterseite des Zylinders 20 vorgesehenen Labyrinth-artigen Kugelführung 28 (vgl. Fig. 2c) aufgenommen ist, die in einer an sich aus dem Stand der Technik (vgl. beispielsweise US 6,803,525 B1) bekannten Weise ausgebildet ist. Beim Auf- oder Abwickeln des Kabels läuft dabei die Kugel auf einer inneren Kreisbahn der Kreisführung 28, während die Kugel bei Stillstand des Drehzylinders 20 schließlich in eine radial äußere Aufnahme der Kugelführung 28 einläuft, um die weitere Drehbewegung des Zylinders 20 zu sperren. Durch leichtes Ziehen an dem Kabel kann die Kugel wieder freigegeben und in die innere Kreisführung der Kugelführung 28 überführt werden, in der der Zylinder 20 frei gedreht werden kann. Der so ausgebildete Sperrmechanismus sperrt die Drehbewegung des vorgespannten Zylinders 20 in diskreten, durch die Kugelführung 28 vorgegebenen Drehstellungen desselben. Der Sperrmechanismus ist dabei vollständig innerhalb der Kabelaufwickeleinheit 50 ausgebildet, das heißt vollständig von Elementen derselben ausgebildet, was den Austausch des Kabels in der vorstehend bezeichneten Weise ermöglicht, wenn die Kabelaufwickeleinheit 50 aus dem Gehäuse 1 herausgenommen ist.

Ein solcher Sperrmechanismus kann selbstverständlich auch in anderer Weise ausgebildet sein, beispielsweise als Ratschenmechanismus bzw. Sperrklinkenmechanismus, wie in US 6,803,525 B1 offenbart, als zungenförmiges Sperrelement, das mit einer an dem Zylinder ausgebildeten kreisförmigen Führung zusammenwirkt, wie in DE 20 2004 011 010 U1 oder DE 20 2004 014 202 U1 offenbart, oder als Führungsringstruktur, wie beispielsweise in DE 298 13 079 U1 offenbart. Der Inhalt der in diesem Absatz genannten Druckschriften sei hiermit ausdrücklich im Wege der Bezugnahme zu Offenbarungszwecken mit in der vorliegenden Anmeldung beinhaltet.

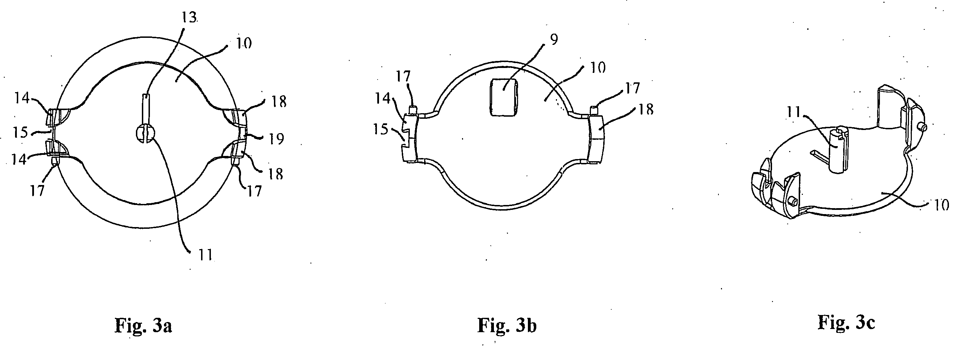

Wie in der Fig. 1 gezeigt, ist an dem Gehäuseboden 3 ein Vorsprung 5 ausgebildet, der mit einer korrespondierenden Ausnehmung 9 auf der Unterseite des Sockels 10 zusammenwirkt (vgl. Fig. 3b), um einen Rastmechanismus zum lösbaren Sichern der Kabelaufwickeleinheit 50 in dem Gehäuse 1 auszubilden. Selbstverständlich kann die Aufwickeleinheit 50 auch in beliebiger anderer Weise form- oder kraftschlüssig in dem Gehäuse 1 aufgenommen sein.

Wie den Fig. 1 bis 3c entnehmbar ist, ist der Durchmesser des Kabelaufwickelzylinders 20 kleiner als der Durchmesser des Sockels 10. Somit bildet der Boden des Sockels 10 ein flanschartiges Gebilde, das durch den dom- bzw. haubenartig gewölbten Außenumfangsrand des Gehäuses 1 abgeschlossen ist, wenn die Kabelaufwickeleinheit 50 in dem Gehäuse 1 aufgenommen ist. In diesem Zustand wird zwischen der Umfangs-Seitenwand 21 des Zylinders 20 und dem dom- bzw. haubenartig gewölbten Außenumfangsrand des Gehäuses 1 ein Ringspalt ausgebildet, der durch seine Formgebung ideal zum gesicherten Aufnehmen des auf den Zylinder 20 aufgewickelten Kabels geeignet ist, ohne dass das Kabel sich verdreht oder verfängt.

Wie der vorstehenden Beschreibung ohne weiteres entnommen werden kann, wird die Kabelaufwickeleinheit zum Austausch eines Ohrhörerkabels aus dem Gehäuse entnommen. Dann ist der Kabelklemmbereich des Kabelaufwickelkörpers frei zugänglich, aus dem das Ohrhörerkabel nach im Wesentlichen vollständigen Abspulen des Kabels herausgenommen und durch ein anderes Ohrhörerkabel ersetzt werden kann. In dem vollständig abgespulten Zustand ist der Kabelaufwickelkörper durch einen Sperrmechanismus gesperrt, um ein unbeabsichtigtes Zurückspulen zu verhindern.

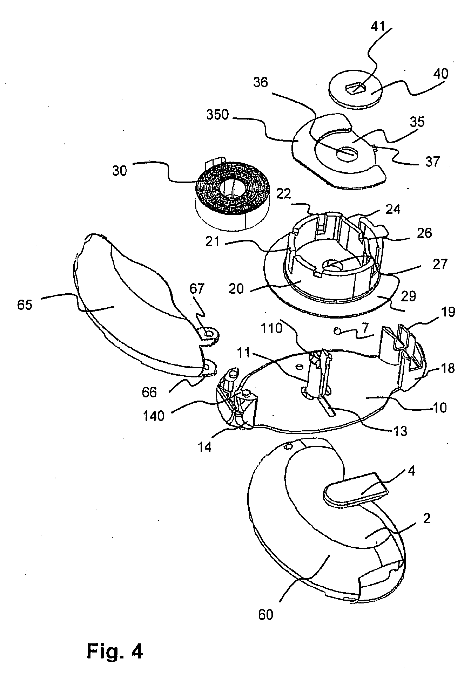

Nachfolgend wird anhand der Figuren 4 bis 8 ein zweites Ausführungsbeispiel gemäß der vorliegenden Erfindung beschrieben werden. Gemäß der Fig. 4 umfasst das Gehäuse eine große Gehäuseschale 60 und eine kleine Gehäuseschale 65, die jeweils an oberen und unteren Zapfen 140 der vorderen Kabeleinlaufwangen 14 schwenkbeweglich gelagert sind. Beim Aufschwenken werden einerseits der vordere Kabeleinlaufbereich 15 und der hintere Kabeleinlaufbereich 19 freigegeben und wird andererseits die Kabelaufwickeleinheit freigegeben, sodass bei im Wesentlichen vollständig abgespulten Ohrhörerkabel das Kabel in dem Kabelklemmbereich 26 freigegeben, entnommen und durch Klemmen eines anderen Ohrhörerkabels ausgetauscht werden kann. Wie in der Fig. 4 gezeigt, sind am oberen Ende des Schafts 11 zwei flügelartige verbreiterte Abschnitte 110 ausgebildet, die aufgrund des in dem Schaft 11 ausgebildeten Längsschlitzes elastisch aufeinander zu bewegt werden können. Durch Zusammendrücken der Abschnitte 110, unterstützt durch die auf ihrer Oberseite ausgebildeten Einführschrägen, können die Abschnitte 110 beim Aufsetzen des Federdeckels 35 und der Sicherungsscheibe 40 in die Öffnung 36 des Federdeckels 35 und in die Öffnung 41 der Sicherungsscheibe 40 eingeführt werden. Wenn die Sicherungsscheibe 40 vollständig aufgesetzt ist, schwenken die Abschnitte 110 zurück, um so den Kabelaufwickelzylinder 20 und die Drehfeder 30 axial an dem Schaft 11 zu sichern. Um das eingelegte Kabel wirkungsvoller zu führen, ist am Boden des Kabelaufwickelzylinders 20 ein Flansch 29 ausgebildet, dessen Breite in Radialrichtung in etwa der Dicke der Kabelwicklung im vollständig aufgewickelten Zustand entspricht.

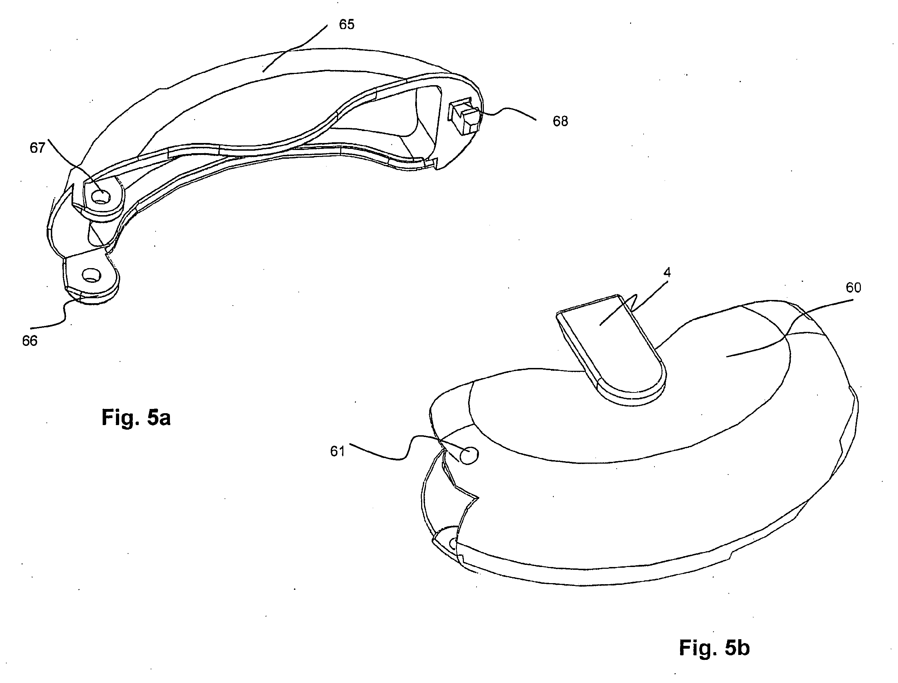

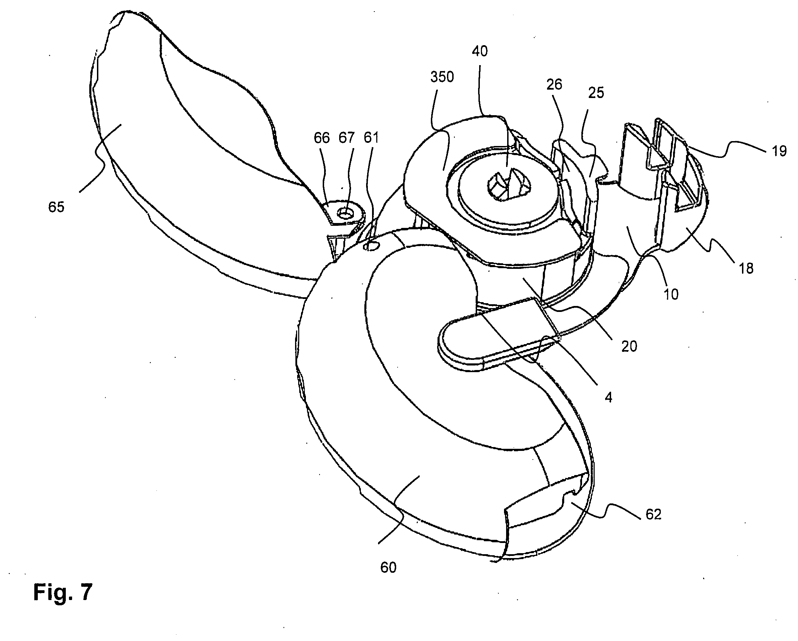

Gemäß der Fig. 5a sind an der kleinen Gehäuseschale 65 zwei Stege 66 mit darin ausgebildeten Öffnungen 67 oder Aussparungen vorgesehen, die in die Zapfen 140 an den vorderen Kabeleinlaufwangen 14 (vgl. Fig. 4) eingehängt sind, um die Gehäuseschale 65 schwenkbeweglich an dem Sockel 10 zu lagern. An ihrem diametral gegenüberliegenden Ende ist an der Gehäuseschale 65 ein elastischer Schnapphaken 68 ausgebildet, der bei geschlossenen Gehäuseschalen mit einer an der großen Gehäuseschale 60 ausgebildeten Verrastungsaussparung 62 (vgl. Fig. 7) zusammenwirkt, um die beiden Gehäuseschalen 60, 65 miteinander zu verrasten und das so ausgebildete Gehäuse geschlossen zu halten. Gemäß der Fig. 5b sind an der großen Gehäuseschale 60 zwei Öffnungen 61 oder Aussparungen ausgebildet, die in die Zapfen 140 an den vorderen Kabeleinlaufwangen 14 (vgl. Fig. 4) eingehängt sind, um die Gehäuseschale 60 schwenkbeweglich an dem Sockel 10 zu lagern.

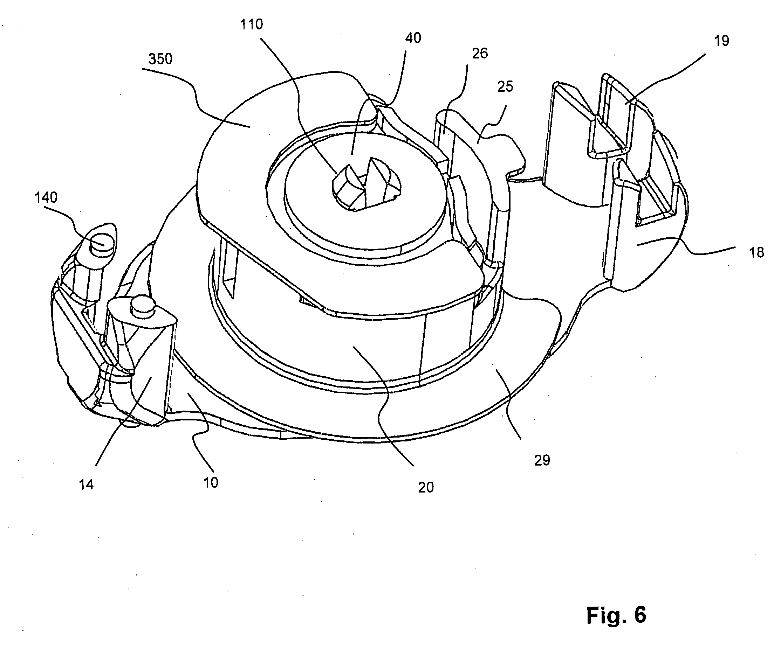

Die Fig. 6 zeigt die Kabelaufwickeleinheit 50 gemäß der zweiten Ausführungsform in einer Perspektivansicht. Erkennbar ist die axiale Sicherung des Federdeckels, der Feder und des Kabelaufwickelzylinders 20 durch die Sicherungsscheibe 40. Der Kabelklemmbereich 26 ist von der Oberseite der Einheit 50 her frei zugänglich.

Wie in der Fig. 7 gezeigt, sind der vordere Kabeleinlaufbereich, der hintere Kabeleinlaufbereich 19 und der Kabelklemmbereich 26 nach Aufschwenken der beiden Gehäuseschalen 60, 65 von der Oberseite her frei zugänglich. Nach im Wesentlichen vollständigem Abspulen des Ohrhörerkabels (nicht gezeigt) kann dieses dem Kabelklemmbereich 26 entnommen und durch ein anderes Ohrhörerkabel ausgetauscht werden. Nach Abspulen des Kabels ist der Kabelaufwickelzylinder 20 aufgrund des vorstehend beschriebenen Sperrmechanismus oder eines vergleichbaren aus dem Stand der Technik bekannten Sperrmechanismus gesperrt, um ein unbeabsichtigtes Zurückspulen des Kabelaufwickelzylinders 20 zu verhindern. Der Sperrmechanismus kann beispielsweise durch eine Zugbewegung am Ohrhörerkabel in Abwickelrichtung oder andere aus dem Stand der Technik bekannte Maßnahmen freigegeben werden.

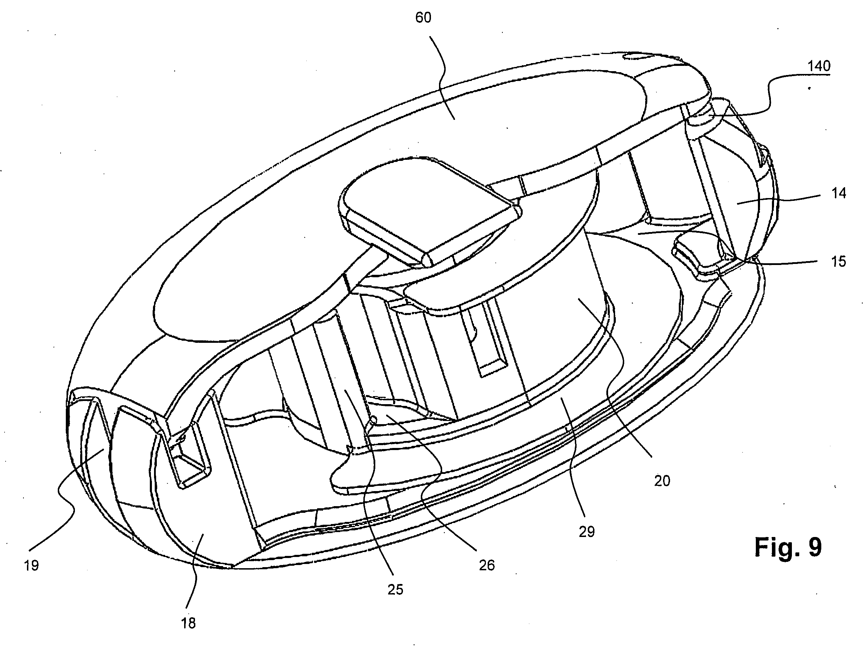

In der Fig. 9 sind die beiden Kabeleinlaufbereiche 15, 19 und der Kabelklemmbereich 26 bei eingeführter Kabelaufwickeleinheit übersichtlich dargestellt.

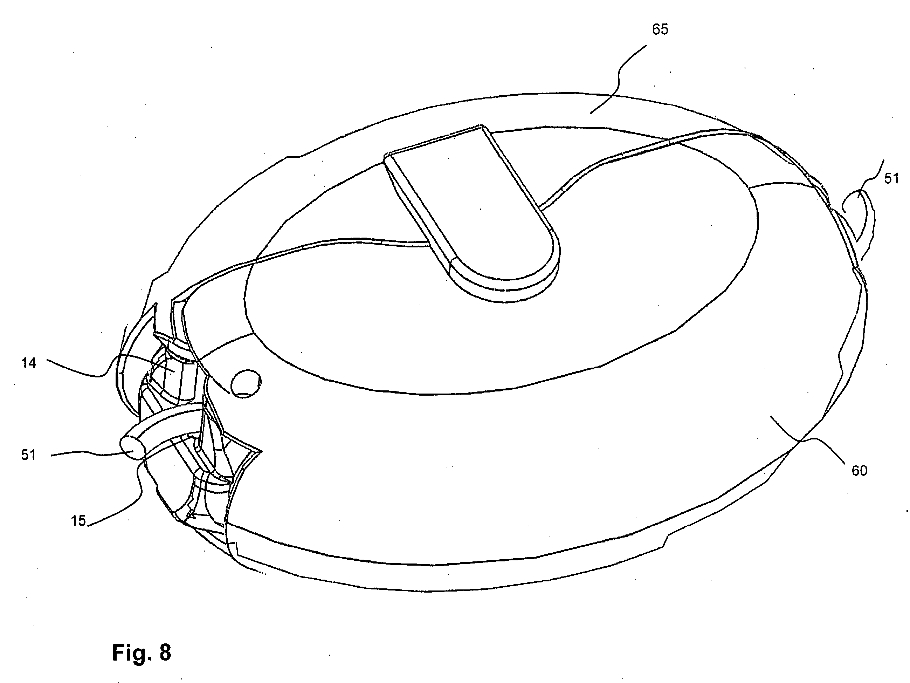

Die Fig. 8 zeigt den Kabelaufwickler gemäß der zweiten Ausführungsform bei geschlossenen Gehäuseschalen 60, 65 und eingelegtem Ohrhörerkabel 51. In diesem Zustand ist das zweischalige Gehäuse im Wesentlichen vollständig geschlossen und ist das Kabel 51 durch die Kabeleinlaufwangen 14 und 18 (vgl. Fig. 4) zuverlässig geführt.

Wie dem Fachmann beim Studium der vorstehenden Beschreibung ohne weiteres ersichtlich sein wird, können die Elemente des erfindungsgemäßen Kabelaufwicklers präzise und kostengünstig durch Spritzgießen eines geeigneten Kunststoffes ausgebildet werden. Der Außendurchmesser des zylindrischen Gehäuses 1 richtet sich dabei im Wesentlichen nach der aufzunehmenden Kabellänge und kann bei der erfindungsgemäß bevorzugten Anwendung zum Aufwickeln einer Freisprechgarnitur für Mobiltelefone etwa im Bereich von 4 bis 6 cm liegen. Im vollständig aufgewickelten Zustand ragen im Wesentlichen nur noch die Ohrknöpfe und der Stecker des Ohrhörers aus dem Gehäuse 1 heraus, im Falle der Verwendung zum Aufwickeln einer Freisprechgarnitur für Mobiltelefone ferner das Mikrophon mit der Halteklammer. Damit diese Elemente nicht unkontrolliert von dem Gehäuse abhängen, können gemäß einer weiteren, nicht gezeigten Ausführungsform, an dem Gehäuse Halteelemente bzw. Halteaufnahmen zum vorübergehenden Aufnehmen bzw. Sichern solcher Elemente vorgesehen sein.

### Bezugszeichenliste

- 1: Gehäuse
- 2: Gehäuseoberseite
- 3: Gehäuseboden
- 4: Führung
- 5: Vorsprung
- 6: Seitenblende
- 7: Kugel
- 9: Vertiefung / Aussparung
- 10: Sockel
- 11: Zapfen
- 110: Elastischer verbreiterter Abschnitt
- 12: Schlitz
- 13: Kugelführung
- 14: Vordere Kabeleinlaufwange
- 140: Zapfen
- 15: Vordere Kabeleinlaufbereich
- 16: Schlitz
- 17: Zapfen
- 18: Hintere Kabeleinlaufwange
- 19: Hinterer Kabeleinlaufbereich
- 20: Kabelaufwickelzylinder
- 21: Seitenwand
- 22: Aussparung für Federdeckel
- 23: Aussparung für Spiralfeder
- 24: Bogenförmig gekrümmte Seitenwand
- 25: Vordere Seitenwand
- 26: Kabelklemmbereich / Kabelführung
- 27: Zentrale Bohrung
- 28: Kugelführung
- 29: Flansch
- 30: Dreh- bzw. Spiralfeder
- 31: Einsteckende der Spiralfeder 30
- 32: Einhänglasche der Spiralfeder 30
- 35: Federdeckel
- 350: Erhabener Abschnitt
- 36: Zentrale Bohrung
- 37: Radialer Vorsprung
- 38: Bogenförmig gekrümmte Randfläche
- 40: Sicherungsscheibe
- 41: Zentrale Bohrung
- 45: Gehäuseblende
- 50: Kabelaufwickeleinheit
- 51: Kabel
- 60: Große Gehäuseschale
- 61: Öffnung / Aussparung
- 62: Verrastungsaussparung
- 65: Kleine Gehäuseschale
- 66: Steg
- 67: Öffnung / Aussparung
- 68: Schnapphaken

## Patentansprüche

1. Kabelaufwickler für Ohrhörer, insbesondere für eine Freisprechgarnitur für Mobiltelefone, mit
einer Kabelaufwickeleinheit (50), die einen drehbweglichen, zylindrischen Kabelaufwickelkörper (20) zum Aufwickeln eines Ohrhörerkabels umfasst, der in eine Drehrichtung vorgespannt ist, in der das Ohrhörerkabel weiter auf den Kabelaufwickelkörper (20) aufgewickelt wird, und
einem Gehäuse (1, 45; 60, 65) zum Aufnehmen der Kabelaufwickeleinheit (50) mit dem aufgewickelten Ohrhörerkabel und dem vorgespannten Kabelaufwickelkörper (20),
**dadurch gekennzeichnet, dass** ein Sperrmechanismus (7, 13, 28) zum Sperren des Kabelaufwickelkörpers (20), wenn das Ohrhörerkabel vollständig von dem Kabelaufwickelkörper (20) abgespult ist, vorgesehen ist, wobei der Kabelaufwickelkörper einen Kabelklemmbereich (26) zum Klemmen eines Abschnitts des Ohrhörerkabels aufweist und
a) die Kabelaufwickeleinheit (50) gemeinsam mit dem vorgespannten Kabelaufwickelkörper in dem Gehäuse verschieblich oder herausnehmbar aufgenommen ist oder
b) das Gehäuse eine abnehmbare Blende (45) und/oder verschwenkbare Gehäuseabschnitte (60, 65) umfasst, um den Kabelklemmbereich (26) frei zugänglich zu machen so dass
das Ohrhörerkabel bei vorgespanntem Kabelaufwickelkörper (20) austauschbar ist.

2. Kabelaufwickler nach Anspruch 1, wobei das Gehäuse (1, 45) und/oder die Kabelaufwickeleinheit (50) so ausgelegt ist bzw. sind, dass das Ohrhörerkabel in einer vollständig abgewickelten Drehstellung des Kabelaufwickelkörpers (20) aus dem Kabelklemmbereich (26) entnommen und ein anderes Ohrhörerkabel von diesem geklemmt werden kann.

3. Kabelaufwickeler nach Anspruch 2, wobei der Kabelklemmbereich (26) von einer Umfangs-Seitenwand (25) des Kabelaufwickelkörpers (20) und einer dieser radial gegenüber liegenden, bogenförmig gekrümmten Wandung (24) des Kabelaufwickelkörpers (20) ausgebildet ist.

4. Kabelaufwickler nach einem der vorhergehenden Ansprüche, wobei durch Abnehmen der Blende (45) und/oder Verschwenken der Gehäuseabschnitte (60, 65) ein Kabeleinlaufbereich (15) und ein Kabelauslaufbereich (19) zum Austausch des Ohrhörerkabels freigegeben und erneut abgedeckt werden kann.

5. Kabelaufwickler nach einem der vorhergehenden Ansprüche, wobei die Kabelaufwickeleinheit (50) gemeinsam mit dem vorgespannten Kabelaufwickelkörper (20) in dem Gehäuse (1) radial verschiebbar aufgenommen ist, wobei dann, wenn die Kabelaufwickeleinheit (50) vollständig in dem Gehäuse aufgenommen ist, ein Austausch des Ohrhörerkabels verhindert ist.

6. Kabelaufwickler nach Anspruch 5, wobei ein Kabeleinlaufbereich (15) und/oder ein Kabelauslaufbereich (19) der Kabelaufwickeleinheit (50) durch Zusammenwirken von Abschnitten (14, 18) der Kabelaufwickeleinheit und von Abschnitten (6) des Gehäuses (1; 60, 65) ausgebildet ist bzw. sind, um den Austausch des Ohrhörerkabels zuzulassen oder zu verhindern.

7. Kabelaufwickler nach einem der vorhergehenden Ansprüche, wobei die Kabelaufwickeleinheit (50) gemeinsam mit dem vorgespannten Kabelaufwickelkörper (20) zum Austauschen des Ohrhörerkabels vollständig aus dem Gehäuse (1) herausnehmbar ist.

8. Kabelaufwickler nach einem der Ansprüche 5 bis 7, wobei an dem Gehäuse (1) und/oder an der Kabelaufwickeleinheit (50) ein Rastmechanismus (5, 9) zum lösbaren Sichern der Kabelaufwickeleinheit (50) in dem Gehäuse (1) vorgesehen ist.

9. Kabelaufwickler nach einem der vorhergehenden Ansprüche, wobei der Sperrmechanismus (7, 13, 28) zum lösbaren Sperren einer Drehbewegung des Kabelaufwickelkörpers (20) in diskreten oder beliebigen Drehstellungen des Kabelaufwickelkörpers (20) ausgelegt ist.

10. Kabelaufwickler nach Anspruch 9, wobei der Sperrmechanismus durch Zusammenwirken des Gehäuses (1) mit der Kabelaufwickeleinheit (50) ausgebildet ist oder der Sperrmechanismus (7, 13, 28) vollständig innerhalb der Kabelaufwickeleinheit (50) ausgebildet ist oder der Sperrmechanismus von einer radialen Aussparung (13) auf einem Boden (10) der Kabelaufwickeleinheit und von einer auf einer dem Boden zugewandten Unterseite des Kabelaufwickelkörpers (20) vorgesehenen Führungsnut (28) zum Führen einer in der radialen Aussparung (13) aufgenommenen Kugel (7) ausgebildet ist oder der Sperrmechanismus von einem Sperrklinkenmechanismus ausgebildet ist.

11. Kabelaufwickler nach einem der vorhergehenden Ansprüche, wobei die Kabelaufwickeleinheit (50) eine Drehfeder (30) zum Vorspannen des Kabelaufwickelkörpers (20) umfasst, deren eines Ende (31) mit einem Boden (10) der Kabelaufwickeleinheit wirkverbunden ist und deren anderes Ende (32) mit dem Kabelaufwickelkörper (20) wirkverbunden ist.

12. Kabelaufwickler nach Anspruch 11, wobei die Drehfeder (30) vollständig innerhalb einer zylindrischen Aufnahme des Kabelaufwickelkörpers (20) aufgenommen ist, wobei die Drehfeder (30) durch Heißverprägen oder Verrasten eines Sicherungselements (40) an einem am Boden (10) der Kabelaufwickeleinheit vorgesehenen Zapfen (11) axial gesichert ist.

13. Kabelaufwickler nach einem der vorhergehenden Ansprüche, wobei an dem Gehäuse (1) Halteaufnahmen zum vorübergehenden Aufnehmen eines Steckers und/oder von Ohrhören und/oder eines Mikrophons des Ohrhörers bzw. der Freisprechgarnitur vorgesehen sind.

14. Kabelaufwickler nach einem der vorhergehenden Ansprüche, wobei eine Außenumfangswand des Gehäuses (1) dom- bzw. haubenförmig gewölbt ausgebildet ist, so dass zwischen einer Umfangs-Seitenwand (21) des Kabelaufwickelkörpers (20) und der Außenumfangswand des Gehäuses (1) eine ringförmige Kabelaufnahme zum Aufnehmen des Ohrhörerkabels mit einem dom- bzw. haubenförmig gewölbten Außenumfang ausgebildet ist.

## Claims

1. A wire-winding device for earphones, in particular for a hands free kit for mobile phones, comprising
a wire-winding unit (50), which comprises a rotary cylindrical wire-winding body (20) for winding up an earphone wire which is pretensioned in a direction of rotation in which the earphone wire will continue to be wound onto the wire-winding body (20) and
a housing (1; 45; 60; 65) for accommodation of the wire-winding unit (20) with the wound up earphone wire and the pretensioned wire-winding body (20),
**characterized in that** there is provided a locking mechanism (7, 13, 28) for locking the wire-winding body (20), when the earphone wire is completely unwound from said wire-winding body (20), wherein the wire-winding body comprises a wire clamping area (26) for clamping a portion of said earphone wire and
a) said wire-winding unit (50) together with the pre-tensioned wire-winding body is received in said housing such that it can be displaced or taken out or
b) said housing comprises a removable cover (45) and/or pivotable housing sections (60, 65) so that said wire clamping area is accessible,
such that the earphone wire is replaceable with the wire-winding body pretensioned.

2. Wire-winding device according to claim 1, wherein said housing (1, 45) and/or said wire-winding unit (50) is designed such that in a completely unwound rotary position of the wire-winding body (20) the earphone wire can be removed from the wire clamping area (26) and a different earphone wire can be clamped by said wire clamping area.

3. Wire-winding device according to claim 2, wherein the wire clamping area (26) is formed by a circumferential side wall (25) of the wire-winding body (20) and a radially opposing, arch-shaped curved wall (24) of the wire-winding body (20).

4. Wire-winding device according to any of the preceding claims, wherein by removing said cover (45)and/or by pivoting said housing sections (60, 65) a wire inlet area (15) and a wire outlet area (19) can be exposed and concealed again for replacement of the earphone wire.

5. Wire-winding device according to any of the preceding claims, wherein the wire-winding unit (50) together with the pretensioned wire-winding body (20) is accommodated in the housing (1) so as to be movable radially, whereby replacement of the earphone wire is then prevented when the wire-winding unit (50) is accommodated completely in the housing.

6. Wire-winding device according to claim 5, wherein a wire inlet area (15) andor a wire outlet area (19) of the wire-winding unit (50) is formed by cooperation of sections (14, 18) of said wire-winding unit and of sections of the housing (1; 60, 65) to permit or prevent replacement of the earphone wire.

7. Wire-winding device according to any of the preceding claims, wherein the wire-winding unit (50) together with the pretensioned wire-winding body (20) is completely removable from the housing (1) for replacement of the carphone wire.

8. Wire-winding device according to any of claims 5 to 7, wherein a latching mechanism (5, 9) is provided on said housing (1) and/or said wire-winding unit (50) for detachably securing the wire-winding unit (50) in the housing (1).

9. Wire-winding device according to any of the preceding claims, wherein said locking mechanism (7, 13, 28) is configured for releasably locking a rotary movement of the wire-winding body (20) in discrete or arbitrary rotary positions of the wire-winding body (20).

10. Wire-winding device according to claim 9, wherein the locking mechanism is formed by cooperation of the housing (1) with the wire-winding unit (50) or wherein the locking mechanism (7, 13, 28) is formed completely inside the wire-winding unit (50) or wherein the locking mechanism is formed by a radial cut-out (13) on a floor (10) of the wire-winding unit and by a guide groove (28) provided on an underside of the wire-winding body (26) facing the floor for guiding a ball (7) accommodated in the radial cut-out (13) or wherein the locking mechanism is formed by a pawl mechanism.

11. Wire-winding device according to any of the preceding claims, wherein the wire-winding unit (50) comprises a torsion spring (30) for pretensioning the wire-winding body (20), one end (31) of said spring being actively joined to a floor (10) of the wire-winding unit and the other end (32) actively cooperating with the wire-winding body (20).

12. Wire-winding device according to claim 11, wherein the torsion spring (30) is accommodated completely inside a cylindrical receptacle of the wire-winding body (20), wherein the torsion spring (30) is axially secured to a pin (11) provided on a floor (10) of said wire winding unit by hot stamping or latching of a locking element (40).

13. Wire-winding device according to any of the preceding claims, wherein retaining holders are provided on said housing (1) for temporarily accommodating a connector and/or earphones and/or a microphone of the earphones or of the hands free kit.

14. Wire-winding device according to any of the preceding claims, wherein an outer circumferential wall of the housing (10) is formed curved and dome-shaped or hood-shaped so that an annular wire receptacle for accommodating the carphone wire with a dome or hood-shaped curved outer circumference is formed between a circumferential side wall (21) of the wire-winding body (20) and the outer circumferential wall of the housing (1).

## Revendications

1. Enrouleur de câble pour casque d'écoute, en particulier pour un kit mains libres pour téléphones portables, avec
une unité d'enroulement de câble (50) qui comporte un corps d'enroulement de câble (20) cylindrique, rotatif pour l'enroulement d'un câble pour casque d'écoute qui est précontraint dans un sens de rotation, dans lequel le câble pour casque d'écoute est encore enroulé sur le corps d'enroulement de câble (20), et
un boîtier (1, 45 ; 60, 65) pour le logement de l'unité d'enroulement de câble (50) avec le câble pour casque d'écoute enroulé et le corps d'enroulement de câble (20) précontraint,
**caractérisé en ce qu'**un mécanisme de verrouillage (7, 13, 28) pour le verrouillage du corps d'enroulement de câble (20) est prévu, lorsque le câble pour casque d'écoute est complètement dévidé du corps d'enroulement de câble (20), le corps d'enroulement de câble présentant une zone de serrage de câble (26) pour le serrage d'un tronçon de câble pour casque d'écoute et
a) l'unité d'enroulement de câble (50) est logée à coulissement ou retirable conjointement avec le corps d'enroulement de câble dans le boîtier ou
b) le boîtier comporte un panneau (45) amovible et/ou des sections de boîtier (60, 65) pivotantes afin de rendre librement accessible la zone de serrage de câble (26) de sorte que
le câble pour casque d'écoute puisse être remplacé lorsque le corps d'enroulement de câble (20) est précontraint.

2. Enrouleur de câble selon la revendication 1, dans lequel le boîtier (1, 45) et/ou l'unité d'enroulement de câble (50) est conçue de sorte que le câble pour casque d'écoute puisse être retiré dans une position de rotation complètement déroulée du corps d'enroulement de câble (20) de la zone de serrage de câble (26) et un autre câble pour casque d'écoute puisse être serré par celui-ci.

3. Enrouleur de câble selon la revendication 2, dans lequel la zone de serrage de câble (26) est réalisée par une paroi latérale périphérique (25) du corps d'enroulement de câble (20) et une paroi (24) cintrée en forme d'arc, se trouvant radialement opposée à celle-ci du corps d'enroulement de câble (20).

4. Enrouleur de câble selon l'une quelconque des revendications précédentes, dans lequel une zone d'entrée de câble (15) et une zone de sortie de câble (19) peuvent être libérées et de nouveau recouvertes pour le remplacement du câble pour casque d'écoute en retirant le panneau (45) et/ou pivotant les sections de boîtier (60, 65).

5. Enrouleur de câble selon l'une quelconque des revendications précédentes, dans lequel l'unité d'enroulement de câble (50) est logée radialement à coulissement radial conjointement avec le corps d'enroulement de câble(50) précontraint dans le boîtier (1), dans lequel si l'unité d'enroulement de câble (50) est complètement logée dans le boîtier, un remplacement du câble pour casque d'écoute est empêché.

6. Enrouleur de câble selon la revendication 5, dans lequel une zone d'entrée de câble (15) et/ou une zone de sortie de câble (19) de l'unité d'enroulement de câble (50) est réalisée par la coopération de sections (14, 18) de l'unité d'enroulement de câble et de sections (6) du boîtier (1 ; 60, 65) afin d'autoriser ou d'empêcher le remplacement du câble pour casque d'écoute.

7. Enrouleur de câble selon l'une quelconque des revendications précédentes, dans lequel l'unité d'enroulement de câble (50) peut être retirée complètement du boîtier (1) conjointement avec le corps d'enroulement de câble (20) précontraint pour le remplacement du câble pour casque d'écoute.

8. Enrouleur de câble selon l'une quelconque des revendications 5 à 7, dans lequel un mécanisme d'encliquetage (5, 9) pour le blocage détachable de l'unité d'enroulement de câble (50) dans le boîtier (1) est prévu sur le boîtier (1) et/ou sur l'unité d'enroulement de câble (50).

9. Enrouleur de câble selon l'une quelconque des revendications précédentes, dans lequel le mécanisme de verrouillage (7, 13, 28) est conçu pour le blocage détachable d'un mouvement de rotation du corps d'enroulement de câble (20) dans des positions de rotation distinctes ou quelconques du corps d'enroulement de câble (20).

10. Enrouleur de câble selon la revendication 9, dans lequel le mécanisme de verrouillage est réalisé par la coopération du boîtier (1) avec l'unité d'enroulement de câble (50) ou le mécanisme de verrouillage (7, 13, 28) est réalisé complètement dans l'unité d'enroulement de câble (50) ou le mécanisme de verrouillage est réalisé par un évidement (13) radial sur un fond (10) de l'unité d'enroulement de câble et par une rainure de guidage (28) prévue sur un dessous tourné vers le fond du corps d'enroulement de câble (20) pour le guidage d'une bille (7) logée dans l'évidement (13) radial ou le mécanisme de verrouillage est réalisé par un mécanisme à cliquet d'arrêt.

11. Enrouleur de câble selon l'une quelconque des revendications précédentes, dans lequel l'unité d'enroulement de câble (50) comporte un ressort de torsion (30) pour la précontrainte du corps d'enroulement de câble (20), dont une extrémité (31) est reliée de manière fonctionnelle à un fond (10) de l'unité d'enroulement de câble et dont l'autre extrémité (32) est reliée de manière fonctionnelle au corps d'enroulement de câble (20).

12. Enrouleur de câble selon la revendication 11, dans lequel le ressort de torsion (30) est logé complètement dans un logement cylindrique du corps d'enroulement de câble (20), dans lequel le ressort de torsion (30) est bloqué axialement par estampage à chaud ou encliquetage d'un élément de blocage (40) sur un tenon (11) prévu sur le fond (10) de l'unité d'enroulement de câble.

13. Enrouleur de câble selon l'une quelconque des revendications précédentes, dans lequel sur le boîtier (1) sont prévus des logements de retenue pour le logement temporaire d'un connecteur et/ou du casque d'écoute et/ou d'un microphone du casque d'écoute ou du kit mains libres.

14. Enrouleur de câble selon l'une quelconque des revendications précédentes, dans lequel une paroi périphérique extérieure du boîtier (1) est réalisée de manière cintrée en forme de dôme ou de calotte de sorte qu'entre une paroi latérale périphérique (21) du corps d'enroulement de câble (20) et la paroi périphérique extérieure du boîtier (1) soit réalisé un logement de câble annulaire pour le logement du câble pour casque d'écoute avec une périphérie extérieure cintrée en forme de dôme ou de calotte.
